# EUROPÄISCHE PATENTSCHRIFT

(11) **EP 1 896 207 B1**
(45) Veröffentlichungstag und Bekanntmachung des Hinweises auf die Patenterteilung: **14.01.2015**
(21) Anmeldenummer: 06762066.6
(22) Anmeldetag: 16.06.2006
(51) Int. Cl.: B23B 31/10, B23B 29/04, B23B 31/11, B23B 27/00, B23C 5/10, B23D 77/00

(54) **Werkzeugsystem mit Schnittstelle**
Tool system with interface
Système d'outillage avec interface

(30) Priorität: 20.06.2005 DE 102005029758
(43) Veröffentlichungstag der Anmeldung: 12.03.2008
(73) Patentinhaber: MAPAL Fabrik für Präzisionswerkzeuge Dr. Kress KG, D-73431 Aalen (DE)
(72) Erfinder: KRESS, Dieter, 73431 Aalen (DE); HÄBERLE, Friedrich, 73466 Lauchheim (DE)
(74) Vertreter: Gleiss, Alf-Olav
(86) Internationale Anmeldenummer: PCT/EP2006/005809
(87) Internationale Veröffentlichungsnummer: WO 2006/136339

(56) Entgegenhaltungen:
- EP-A- 0 291 477
- EP-A- 0 615 806
- WO-A-2004/113001
- FR-A- 864 432
- GB-A- 1 233 953
- US-A- 4 166 711
- US-A- 4 557 642
- US-A- 6 146 060
- US-A1- 2004 057 785
- PATENT ABSTRACTS OF JAPAN Bd. 012, Nr. 325 (M-737), 5. September 1988 (1988-09-05) & JP 63 093512 A (MATSUSHITA ELECTRIC IND CO LTD), 23. April 1988 (1988-04-23)

## Beschreibung

Die Erfindung betrifft ein Werkzeugsystem mit einer Spanneinrichtung für mindestens zwei aneinander grenzende Teile des Werkzeugsystems und mit einer Schnittstelle dazwischen gemäß Oberbegriff des Anspruchs 1.

Ein solches Werkzeugsystem ist aus der WO 2004/113001 bekannt.

Schnittstellen der hier angesprochenen Art sind bekannt. Im Bereich einer Schnittstelle werden Teile eines Werkzeugsystems miteinander verbunden, sei es einen mit einer Werkzeugmaschine verbindbaren Halter mit einem Werkzeugkopf, einen Halter mit einem Adapter, einen Adapter mit einem Werkzeugkopf, einen Adapter mit einem Werkzeugeinsatz oder dergleichen. Teile einer Schnittstelle können auch Zwischenelemente oder Werkzeugteile sein, die Schneiden zur Bearbeitung eines Werkstücks aufweisen. Die Teile eines Werkzeugsystems können letztlich an einen bestimmten Anwendungsfall angepasst sein. Zwischen je zwei aneinander grenzenden Teilen des Werkzeugsystems ist eine Schnittstelle vorgesehen, an der die beiden Teile miteinander verbindbar sind. Dabei schließt die Stirnseite des einen Teils an der Stirnseite des anderen Teils an. Es ist bekannt, mehrere Teile eines Werkzeugsystems durch einen zentralen Zuganker miteinander zu verbinden, der koaxial zur Mittel- oder Drehachse der Teile des Werkzeugsystems verläuft. Der Zuganker kann Teil der Werkzeughalterung sein und beispielsweise über eine Maschinenspindel angesteuert werden. Es sind auch Zuganker bekannt, die mittels einer so genannten Radialspannung zwei Teile einer Schnittstelle miteinander verbinden. Dazu ist eine spezielle Spanneinrichtung vorgesehen, die außer dem auch als Spannelement bezeichneten Zuganker einen Exzenter aufweist, der im Wesentlichen senkrecht zur Mittelachse der Schnittstelle verläuft und so ausgebildet ist, dass er bei einer Drehbewegung in Richtung der Mittelachse wirkende Kräfte auf den Spannkopf ausübt. Bei einer Drehbewegung des Exzenters in eine Richtung werden die beiden Teile der Schnittstelle fest miteinander verspannt. Wird der Exzenter in die entgegengesetzte Richtung verdreht, reduzieren sich die Spannkräfte so weit, dass die Teile der Schnittstelle getrennt werden können. Bekannte Schnittstellen sind so ausgebildet, dass der Spannkopf Teil eines in ein erstes Teil der Schnittstelle einschraubbaren Spannelements ist. Es hat sich herausgestellt, dass das Einbringen eines Gewindes für das Spannelement in das erste Teil der Schnittstelle sehr aufwendig ist, wenn dieses aus in Zusammenhang mit Werkzeugsystemen häufig verwendetem Hartmetall besteht.

Aufgabe der Erfindung ist es daher, ein Werkzeugsystem zu schaffen, die diesen Nachteil nicht aufweist.

Zur Lösung dieser Aufgabe wird ein Werkzeugsystem vorgeschlagen, das die in Anspruch 1 genannten Merkmale aufweist. Es umfasst eine Spanneinrichtung für die beiden im Bereich der Schnittstelle aneinander grenzenden Teile des Werkzeugsystems, wobei ein erstes Teil ein im Wesentlichen koaxial zur Mittelachse der Schnittstelle angeordnetes Spannelement mit einem Spannkopf aufweist und ein zweites Teil einen den Spannkopf erfassenden, im Wesentlichen senkrecht zur Mittelachse angeordneten Exzenter umfasst. Die Schnittstelle zeichnet sich dadurch aus, dass keines der Teile der Schnittstelle mit einem Gewinde versehen wird. Vielmehr ist vorgesehen, dass das Spannelement zweigeteilt ist und ein erstes Teilelement das erste Teil der Schnittstelle von einer Seite durchgreift und ein zweites Teilelement des Spannelements von einer gegenüberliegenden Seite das erste Teilelement erfasst. Die beiden Teilelemente des Spannelements werden also durch ein Teil der Schnittstelle hindurchgeführt und miteinander verbunden. Weitere Ausgestaltungen des Werkzeugsystems ergeben sich aus den Unteransprüchen.

Die Erfindung wird im Folgenden anhand der Zeichnung näher erläutert. Es zeigen:
Figur 1 eine Prinzipskizze einer Schnittstelle eines Werkzeugsystems mit zwei aneinander grenzenden Teilen im Teilschnitt;
Figur 2 eine vergrößerte Darstellung eines der Teile der Schnittstelle im Längsschnitt;
Figur 3 eine Draufsicht auf das in Figur 2 dargestellte Teil der Schnittstelle;
Figur 4 eine Explosionsdarstellung einer Schnittstelle und
Figur 5 ein abgewandeltes Ausführungsbeispiel eines Werkzeugsystems mit mehreren Schnittstellen.

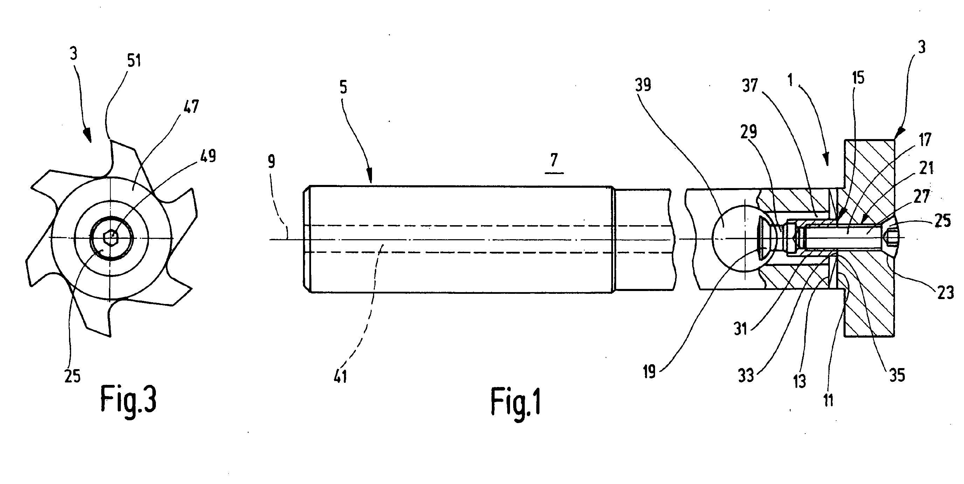

Die in Figur 1 dargestellte Schnittstelle 1 verbindet ein erstes Teil 3 mit einem zweiten Teil 5 eines Werkzeugsystems 7. Bei dem hier dargestellten Ausführungsbeispiel ist das erste Teil 5 als Halter realisiert, der unmittelbar in eine Werkzeugaufnahme einer Maschinenspindel oder aber in einen Adapter, ein Zwischenstück oder dergleichen einsetzbar ist. Das erste Teil 3 ist ein Werkzeugelement, das hier endständig ist, also am Ende eines Werkzeugsystems vorliegt und daher auch als Werkzeugkopf bezeichnet wird.

Die beiden Teile 3 und 5 können beliebig ausgebildet sein. Es könnten hier also auch ein Halter und ein Adapter, ein Halter und ein Zwischenstück, mehrere Adapter oder Zwischenstücke, Adapter und Zwischenstücke, die mit Werkzeugelementen verbunden sind oder mehrere Werkzeugelemente miteinander verbunden sein. Entscheidend ist, dass im Bereich der Schnittstelle zwei Teile eines Werkzeugsystems miteinander so verspannt werden, dass sie koaxial zu einer Dreh- oder Mittelachse 9 angeordnet sind, dass die beiden Teile 3 und 5 nicht zueinander verkippt sind und dass von dem einen Teil, hier von dem zweiten Teil 5, ein Drehmoment auf das andere Teil, hier auf das erste Teil 3 übertragen werden kann. Bei dem hier dargestellten Ausführungsbeispiel sind an der Stirnseite 11 des ersten Teils 3 im Bereich der Schnittstelle 1 und an der gegenüberliegenden Stirnseite 13 des zweiten Teils 5 Erhöhungen und Vertiefungen vorgesehen, die radial also senkrecht zur Mittelachse 9 verlaufen und ineinander greifen. Die Stirnseiten 11 und 13 sind komplementär ausgebildet, so dass die Erhöhungen und Vertiefungen der einen Seite in die der anderen Seite eingreifen können, um ein Drehmoment zu übertragen. Dabei braucht lediglich deren Teilung identisch zu sein. Es wird hier also eine Hirt-Verzahnung realisiert, um Drehmomente über die Schnittstelle 1 hinweg übertragen zu können.

Im Bereich der Schnittstelle 1 ist eine Spanneinrichtung 15 vorgesehen, die in Richtung der Mittelachse 9 verlaufende Spannkräfte aufbaut, um die beiden Teile 3 und 5 miteinander zu verspannen. Die Spanneinrichtung weist ein Spannelement 17 auf, das mit einem Spannkopf 19 verstehen ist und das das erste Teil 3 durchgreift. Dieses ist dazu mit einem Durchgang 21, vorzugsweise mit einer koaxial zur Mittelachse 9 verlaufenden Bohrung, versehen, die sich auf der der Stirnseite 11 gegenüberliegenden Seite des ersten Teils in einem Bereich 23 konisch erweitert, wobei dieser Bereich eine Anlagefläche für einen Kopf 25 des Spannelements 17 bildet.

Das Spannelement 17 zeichnet sich dadurch aus, dass es zweiteilig ausgebildet ist und ein als Schraube ausgebildetes erstes Teilelement 27 umfasst, das durch den Durchgang 21 im ersten Teil 3 verläuft und so lang ausgebildet ist, dass es im eingesteckten Zustand, der in Figur 1 dargestellt ist, mit einem Gewindebereich über die Stirnseite 11 hinausragt. Ein zweites Teilelement 29 weist eine Hülse 31 auf, die mit einem Innengewinde versehen ist, in das das erste Teilelement eingreift. Die beiden Teilelemente des Spannelements 17 können also ineinander geschraubt werden.

An dem dem ersten Teilelement abgewandten Ende des zweiten Teilelements ist der Spannkopf 19 vorgesehen.

An seinem dem Spannkopf 19 abgewandten Ende weist das zweite Teilelement 29 eine Anlagefläche 33 auf, die mit einer am ersten Teil 3 vorgesehenen Anschlagfläche 35 zusammenwirkt. Damit ist das zweite Teilelement 29 - in axialer Richtung, das heißt in Richtung der Mittelachse 9 gesehen - in einer axial definierten Position gegenüber dem ersten Teil 3 angeordnet, wenn die beiden Teilelemente 27 und 29 des Spannelements 17 miteinander fest verbunden, hier also verschraubt sind. Der Spannkopf 19 ist damit in einer exakt definierten Position in einem Abstand zur Stirnseite 11 angeordnet.

Das zweite Teil 5 ist mit einer koaxial zur Mittelachse 9 angeordneten Ausnehmung 37 versehen, deren Innendurchmesser so groß ist, dass der Spannkopf 19 der Spanneinrichtung 15 in das zweite Teil 5 einführbar ist, wenn die beiden Teile 3 und 5 der Schnittstelle 1 miteinander verbunden und verspannt werden sollen.

Das zweite Teil 5 weist eine im Wesentlichen senkrecht zur Mittelachse 9 verlaufende Öffnung 39 auf, in die ein hier nicht dargestellter Exzenter einsetzbar ist, der mit dem Spannkopf 19 zusammenwirkt und auf diesen in Richtung der Mittelachse 9 wirkende Kräfte ausüben kann, um die beiden Teile 3 und 5 der Schnittstelle 1 miteinander zu verspannen.

In Figur 1 ist noch angedeutet, dass das zweite Teil 5 einen Kühl-/ Schmiermittelkanal 41 aufweisen kann, über den ein Kühl-/Schmiermittel in die Ausnehmung 7 gefördert werden kann, das bei der Bearbeitung eines Werkstücks zu dessen Kühlung und zur Kühlung des Werkzeugs dient.

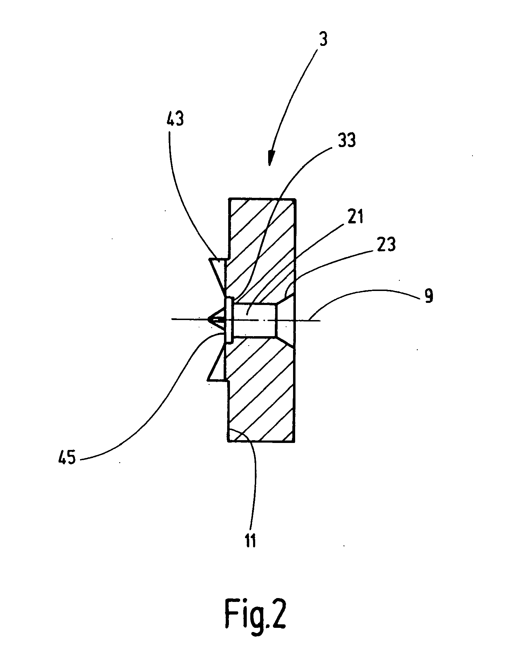

Figur 2 zeigt das erste Teil 3 der Schnittstelle vergrößert im Längsschnitt. Gleiche Teile sind mit gleichen Bezugsziffern versehen, so dass insofern auf die Beschreibung zu Figur 1 verwiesen wird.

Deutlich erkennbar ist hier der Durchgang 21, der konzentrisch zur Mittelachse 9 angeordnet ist und das erste Teil 3 über dessen gesamte Dicke durchgreift, und der sich nach rechts in einem konischen Bereich 23 öffnet, der der Aufnahme eines Kopfs 25 eines ersten Teilelements 27, beispielsweise einer Schraube, dient.

Auf der gegenüberliegenden Seite, im Bereich der Stirnseite 11 ist die Anlagefläche 33 erkennbar. Es ist außerdem ersichtlich, dass auf der Stirnseite 11 Erhöhungen 43 vorgesehen sind, die im Wesentlichen radial, also senkrecht zur Mittelachse 9 verlaufen und in einem Abstand zueinander angeordnet sind, so dass zwischen diesen Vertiefungen 45 gebildet werden. Der Abstand der Erhöhungen 43 und Vertiefungen 45 kann an den Anwendungsfall angepasst werden, also daran, welche Drehmomente zu übertragen sind; ebenso deren Breite und Höhe, die von außen nach innen zunehmen.

Auf der Stirnseite 13 des zweiten Teils sind entsprechende Erhöhungen 43 und 45 vorgesehen, die komplementär ausgebildet sind, so dass die Erhöhungen und Vertiefungen der einen Stirnseite in die der anderen Stirnseite eingreifen können, wenn die Teile 3 und 5 einer Schnittstelle 1 miteinander verspannt werden. Dabei spielt die Kontur der Erhöhungen und Vertiefungen letztlich nicht die wesentliche Rolle. Entscheidend ist das Ineinandergreifen und die damit gegebene Möglichkeit, Drehmomente zu übertragen.

Figur 3 zeigt das erste Teil 3 in Draufsicht, wobei hier die Stirnseite 47 des Werkzeugsystems 7 dargestellt ist, in die der Kopf 25 des Spannelements 17 eingreift. Bei dem hier dargestellten Ausführungsbeispiel ist der Kopf mit einer üblichen Kontur 49 versehen, in die ein Werkzeug zum Drehen des ersten Teilelements 27 eingreifen kann.

Die Draufsicht zeigt, dass das erste Teil 3 mehrere in einem Abstand zueinander angeordnete Schneiden 51 aufweist. Hier sind sechs gleichmäßig über den Umfang des ersten Teils 3 verteilte Schneiden vorgesehen, die jeweils paarweise einander gegenüberliegend angeordnet sind.

Wesentlich ist, dass das erste Teil 3 beliebig ausgestaltet sein kann, beispielsweise auch als Bohrer zum Aufbohren oder zum Erstellen von Sacklochbohrungen, als Reibahle oder dergleichen.

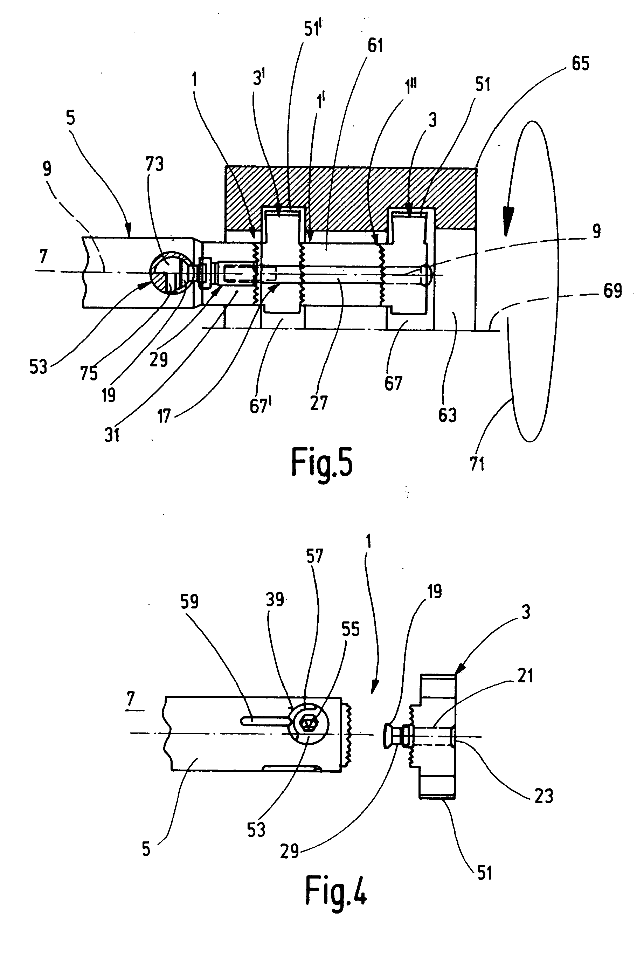

Figur 4 zeigt die Schnittstelle 1 des Werkzeugsystems 7 in Explosionsdarstellung. Außerdem ist das zweite Teil 5 links abgebrochen. Gleiche Teile sind mit gleichen Bezugsziffern versehen, so dass insofern auf die Beschreibung zu den vorangegangenen Figuren verwiesen wird.

Bei der Darstellung gemäß Figur 4 ist in die Öffnung 39 ein Exzenter 53 eingesetzt, der eine Kontur 55 aufweist, in die beispielsweise ein Inbusschlüssel eingreifen kann. Selbstverständlich können hier auch für andere Werkzeuge angepasste Konturen vorgesehen werden. In die Umfangsfläche des Exzenters 3 ist eine bereichsweise umlaufende Nut 57 vorgesehen, in die ein Anschlagelement 55 eingreift, um die Drehbewegung des Exzenters für einen definierten Drehwinkel festzulegen. Der Exzenter 3 weist einen Innenraum auf, der einen sich nach außen öffnenden Durchbruch umfasst, in den der Spannkopf 19 eingreifen kann. Der Innenraum ist mit einer Innenwand versehen, deren Abstand zur Umfangsfläche des Exzenters 53 zunimmt, so dass quasi eine einem Kreisbogen folgende Rampe ausgebildet wird, die mit dem Spannkopf 19 zusammenwirkt und bei einer entsprechenden Drehung des Exzenters 53 diesen mit einer hier nach links wirkenden axialen Spannkraft beaufschlagt.

Derartige Exzenterspannungen sind grundsätzlich bekannt, so dass hier nicht näher darauf eingegangen wird.

Figur 5 zeigt ein abgewandeltes Ausführungsbeispiel eines Werkzeugsystems 7, das deutlich macht, dass Schnittstellen der hier angesprochenen Art in einem Werkzeugsystem 7 mehrfach realisiert werden können und dazu dienen, jeweils zwei aneinander grenzende Teile eines Werkzeugsystems miteinander zu verbinden.

Das Werkzeugsystem 7 weist wiederum ein erstes Teil 3 und ein zweites Teil 5 auf, wobei das erste Teil 3 ein Werkzeugelement darstellt, beispielsweise einen Werkzeugkopf, und das zweite Teil 5 einen Halter. Zwischen den Teilen 3 und 5 sind ein zweites Werkzeugelement 3' und ein Zwischenstück 61 vorgesehen. Die in Richtung der Mittelachse 9 gemessene Länge des Zwischenteils 61 ist an verschiedene Einsatzfälle des Werkzeugsystems frei anpassbar. Ebenso ist die Ausgestaltung des ersten Teils 3 und die des zweiten Werkzeugelements 3' praktisch beliebig ausgestaltbar. Hier ist vorgesehen, dass das erste Teil 3 eine Schneide 51 und das zweite Werkzeugelement 3' eine Schneide 51' aufweisen, wobei das Werkzeugsystem 7 hier als Drehwerkzeug ausgebildet ist und das erste Teil 3 und das zweite Werkzeugelement 3' Drehstähle darstellen. Das Werkzeugsystem 7 dient dazu, wie angedeutet, in die Innenfläche 63 eines hülsenartig ausgestalteten Werkstücks 65 zwei in einem Abstand zueinander angeordnete Nuten 67 und 67' einzubringen. Die Tiefe der Nuten 67, 67' und deren Ausgestaltung hängen von der Kontur der Schneiden 51, 51' und von der Verlagerung des Werkzeugsystems 7 gegenüber der Drehachse 69 ab, um die das Werkstück 65 rotiert, während das Werkzeugsystem 7 feststehend gehalten wird. Die Rotation des Werkstücks 65 ist durch einen Pfeil 71 angedeutet.

Aus den Erläuterungen zu Figur 5 wird ohne weiteres deutlich, dass das Werkzeugsystem 7 auch einen oder mehrere Fräser oder eine Anzahl von Bohrstufen aufweisen kann.

Bei dem in Figur 5 dargestellten Ausführungsbeispiel werden alle Teile des Werkzeugsystems durch ein gemeinsames Spannelement 17 miteinander verspannt, wobei das als Schraube ausgebildete erste Teilelement 27 das erste Teil 3, das Zwischenstück 61 und das zweite Werkzeugelement 3' durchgreift und mit dem zweiten Teilelement verbunden ist. Bei dem hier dargestellten Ausführungsbeispiel sind die beiden Teilelemente 27 und 29 wiederum verschraubt, wobei das zweite Teilelement 29 wieder eine Hülse 31 aufweist, in die das erste Teilelement 27 eingeschraubt ist.

In Figur 5 ist der Exzenter 53 im Querschnitt dargestellt. Deutlich ist hier der Innenraum 73 erkennbar, in den im zusammengesetzten Zustand des Werkzeugsystems 7 der Spannkopf 19 des Spannelements 17 eingreift. Die Wandung des Exzenters 53 weist eine Ausnehmung auf, durch die in der hier dargestellten Position des Exzenters 53 der Spannkopf 19 in den Innenraum 73 eingreift. Die den Innenraum 73 umgebende Wandung des Exzenters greift hinter den Spannkopf 19, wenn der Exzenter hier im Uhrzeigersinn gedreht wird. Da die Dicke der Wandung zunimmt, wird der Spannkopf mehr und mehr nach links in Richtung der Drehachse 9 gezogen, um die Teile des Werkzeugsystems miteinander zu verspannen.

Wird der Exzenter 53 entgegen dem Uhrzeigersinn gedreht, drück eine Auswurfschulter 75 den Spannkopf 19 nach rechts, so dass die Schnittstellen 1, 1', 1" gelöst werden.

Aus Kostengründen ist bei dem Ausführungsbeispiel gemäß Figur 5 lediglich ein einziger Exzenter vorgesehen. Grundsätzlich ist es möglich, im Zwischenstück 61 ebenfalls einen Exzenter vorzusehen, der mit einer kürzeren Schraube zusammenwirkt, die lediglich das erste Teil 3 durchdringt. Das Zwischenstück 61 ist mit einem Innengewinde versehen und kann aus einem weicheren Material hergestellt sein. Das Innengewinde ist in diesem Fall am linken Ende des Zwischenstücks 61 angeordnet und dient dazu, eine Schraube aufzunehmen, die an ihrem linken Ende eine Anlagefläche aufweist, wie sie in Zusammenhang mit der Hülse 31 erläutert wurde, und die im Übrigen einen Spannkopf 19 umfasst.

Am preiswertesten ist es jedoch, alle Teile des Werkzeugsystems 7, die rechts vom zweiten Teil 5 angeordnet sind, insofern gleichartig auszubilden, als sie einen Durchgang aufweisen, durch den das Spannelement hindurchgreifen kann. Um verschiedene Dicken der einzelnen Teile und auch unterschiedliche Anzahlen von Teilen zu realisieren, können dann verschieden lange Schrauben als erstes Teilelement 27 eingesetzt werden, auf die dann das zweite Teilelement 29 aufgeschraubt wird.

Im Folgenden wird noch einmal auf die Funktion der Schnittstelle des Werkzeugsystems näher eingegangen, wobei davon ausgegangen wird, dass die Schnittstellen 1, 1' und 1" des Werkzeugsystems 7 nach Figur 5 alle grundsätzlich gleich ausgebildet sind: Die Stirnseiten zweier im Bereich der Schnittstelle aneinander grenzenden Teile sind mit Erhöhungen und Vertiefungen versehen, die komplementär ausgebildet sind, also ineinander greifen und somit die Übertragung eines Drehmoments erlauben. Für die Grundfunktion der Schnittstelle ist die Ausgestaltung der einander zugewandten Stirnseiten zweier Teile einer Schnittstelle letztlich irrelevant. Entscheidend ist die Übertragbarkeit eines Drehmoments, die auch durch Kulissensteine, Schrauben oder dergleichen realisierbar ist. Die radial verlaufenden Erhebungen und Vertiefungen haben allerdings den Vorteil, dass hier quasi eine Hirtverzahnung realisiert wird, die auch die Kombination von Teilen unterschiedlichen Außendurchmessers erlaubt und die eine axiale Ausrichtung benachbarter Teile sicherstellt.

Die Schnittstelle zeichnet sich dadurch aus, dass sie ein Spannelement 17 mit einem ersten Teilelement 27 und einem zweiten Teilelement 29 aufweist. Es ist also möglich, die Teile eines Werkzeugsystems mit einem Spannelement 17 zu versehen, ohne Innengewinde in diese Teile einbringen zu müssen, die vorzugsweise aus Hartmetall bestehen. Das Spannelement kann also zerlegt und ein erstes Teilelement 27 durch ein oder mehrere Teile des Werkzeugsystems hindurchgeführt werden. Bei dem Ausführungsbeispiel gemäß Figur 1 wird das Spannelement 17 durch ein erstes Teil 3 und bei dem Ausführungsbeispiel gemäß Figur 5 durch ein erstes Teil 3, ein Zwischenstück 61 und ein zweites Werkzeugelement 3' hindurchgeführt. An dem freistehenden Ende des ersten Teilelements 27 wird das zweite Teilelement 29 befestigt, vorzugsweise durch eine Schraubverbindung.

Um eine exakte axiale Positionierung, also in Richtung der Mittelachse 9 gesehen, des Spannkopfs 19 des zweiten Teilelements 29 gegenüber der im Bereich des Spannkopfs 19 liegenden Stirnseite des zugehörigen Teils zu gewährleisten, weist das zweite Teilelement 29 eine Anlagefläche 33 auf, die mit einer Anschlagfläche 35 zusammenwirkt. Die exakte Positionierung des Spannkopfs 19 ist deshalb erforderlich, weil der Exzenter 53 lediglich einen relativ kurzen - in Richtung der Mittelachse 9 gemessenen - Spannweg erlaubt und daher nur geringe Toleranzabweichungen in der Positionierung des Spannkopfs 19 hinnehmbar sind.

Die Schnittstelle zeichnet sich dadurch aus, dass sie sehr einfach aufgebaut ist und eine Drehmomentübertragungseinrichtung aufweist, die letztlich beliebig ausgestaltet werden kann. Da, wie hier beschrieben, radial verlaufende Erhöhungen und Vertiefungen vorgesehen werden, so können auf einfache Weise im Bereich der Schnittstelle unterschiedliche Durchmesser miteinander kombiniert werden. Der Aufbau der Schnittstelle ist trotz des zweigeteilten Spannelements 17 sehr einfach, wobei das erste Teilelement 27 als herkömmliche Schraube ausgebildet sein kann, was besonders günstig in Bezug auf die Herstellungskosten ist. Auch das zweite Teilelement 29 mit der Hülse 31 und dem Spannkopf 19 relativ einfach und kostengünstig realisierbar.

Die hier beschriebene Schnittstelle eignet sich besonders zur Realisierung eines modularen Werkzeugsystems, weil sie besonders einfach und kostengünstig realisierbar ist und weil das Spannelement 17 zwei Teilelemente 27 und 29 aufweist, von denen dass zweite Teilelement 29 in allen Fällen gleich ausgebildet sein kann. Bei verschiedenen Ausführungsbeispielen, wie sie anhand der Figuren 1 und 5 erläutert wurden, ist es lediglich erforderlich, das erste Teilelement 27 in unterschiedlicher Länge zu realisieren.

## Patentansprüche

1. Werkzeugsystem mit einer Spanneinrichtung (15) für jeweils zwei aneinander grenzende Teile (3,5;3,61,3',5) des Werkzeugsystems und mit einer Schnittstelle (1) dazwischen, wobei ein erstes Teil (3) ein im Wesentlichen koaxial zu einer Mittelachse (9) der Schnittstelle (1) zugeordnetes Spannelement (17) mit einem Spannkopf (19) und ein zweites Teil (5) einen den Spannkopf (19) erfassenden, im Wesentlichen senkrecht zur Mittelachse (9) angeordneten Exzenter (53) aufweist und mit einer Drehmomentübertragungseinrichtung, **dadurch gekennzeichnet, dass**
- das Spannelement (17) zweigeteilt ist und ein erstes Teilelement (27) sowie ein zweites Teilelement (29) umfasst und das erste Teilelement (27) das erste Teil (3) von einer Seite durchgreift und das zweite Teilelement (29) von einer gegenüberliegenden Seite das erste Teilelement (27) erfasst, und dass
- die Teile der Schnittstelle zur Realisierung der Drehmomentübertragungseinrichtung auf ihren einem benachbarten Teil zugewandten Stirnseiten radial verlaufende Erhöhungen (43) und Vertiefungen (45) aufweisen, so dass die sich ergebende Kontur der einen Stirnseite im zusammengebauten Zustand der Schnittstelle in die der anderen eingreift.

2. Werkzeugsystem nach Anspruch 1, **dadurch gekennzeichnet, dass** das erste Teilelement (27) und das zweite Teilelement (29) des Spannelements (17) miteinander verschraubbar sind.

3. Werkzeugsystem nach Anspruch 1 oder 2, **dadurch gekennzeichnet, dass** zwischen dem ersten Teil (3) und dem zweiten Teil (5) mindestens ein weiteres Teil (61,3') angeordnet ist.

4. Werkzeugsystem nach einem der vorhergehenden Ansprüche, **dadurch gekennzeichnet, dass** das Spannelement (17) alle Teile der Schnittstelle erfasst.

5. Werkzeugsystem nach einem der vorhergehenden Ansprüche, **dadurch gekennzeichnet, dass** ein Teilelement (29) des Spannelements (17) den Spannkopf (19) aufweist.

6. Werkzeugsystem nach einem der vorhergehenden Ansprüche, **dadurch gekennzeichnet, dass** das den Spannkopf (19) aufweisende Teilelement (29) an seiner dem Spannkopf (19) abgewandten Seite eine Anlagefläche (33) aufweist, die mit einer an dem benachbarten Teil der Schnittstelle (1) vorgesehene Anschlagfläche (35) zusammenwirkt.

## Claims

1. Tool system having a tensioning facility (15) for two adjoining parts (3,5;3,61,3',5) of the tool system each and an interface (1) in between, whereby a first part (3) comprises a tensioning element (17) that is allocated essentially coaxial with respect to a central axis (9) of the interface (1) and has a tensioning head (19), and a second part (5) comprises an eccentric (53) that engages the tensioning head (19) and is arranged essentially perpendicular to the central axis (9), and having a torque transmission facility, **characterised in that**
- the tensioning element (17) is subdivided into two parts and comprises a first partial element (27) and a second partial element (29), and **in that** the first partial element (27) extends through the first part (3) from one side and **in that** the second partial element (29) engages the first partial element (27) from an opposite side, and **in that**
- the parts of the interface comprise, for implementation of the torque transmission facility, on their front faces facing an adjoining part, radially-extending elevations (43) and depressions (45) such that the resulting contour of the one front face engages the contour of the other front face in the assembled state of the interface.

2. Tool system according to claim 1, **characterised in that** the first partial element (27) and the second partial element (29) of the tensioning element (17) can be screwed to each other.

3. Tool system according to claim 1 or 2, **characterised in that** at least one further part (61,3') is arranged between the first part (3) and the second part (5).

4. Tool system according to any one of the preceding claims, **characterised in that** the tensioning element (17) engages all parts of the interface.

5. Tool system according to any one of the preceding claims, **characterised in that** one partial element (29) of the tensioning element (17) comprises the tensioning head (19).

6. Tool system according to any one of the preceding claims, **characterised in that** the partial element (29) comprising the tensioning head (19) comprises, on its side facing away from the tensioning head (19), a contact surface (33) that acts in concert with a contact surface (35) that is provided on the adjoining part of the interface (1).

## Revendications

1. Système d'outil comprenant un dispositif de serrage (15) pour respectivement deux parties adjacentes l'une sur l'autre (3, 5 ; 3, 61, 3', 5) du système d'outil et comprenant une jonction (1) entre elles, sachant qu'une première partie (3) présente un élément de serrage (17) correspondant coaxialement à un axe médian (9) de la jonction (1) avec une tête de serrage (19) et une seconde partie (5) présente un excentrique (53) disposé essentiellement verticalement à l'axe médian (9) et saisissant la tête de serrage (19) et comprenant un dispositif de transmission de couple de rotation, **caractérisé en ce que**
- l'élément de serrage (17) est divisé en deux et comprend un premier élément partiel (27) et un second élément partiel (29) et le premier élément partiel (27) traverse la première partie (3) d'un côté et le second élément partiel (29) saisit le premier élément partiel (27) depuis un côté opposé, et que
- les parties de la jonction pour réaliser le dispositif de transmission de couple de rotation présentent des rehaussements (43) et des évidements (45) radiaux sur leurs côtés avant tournés vers une partie adjacente, de sorte que le contour formé de l'un côté avant se met en prise dans celui de l'autre lorsque la jonction est dans l'état monté.

2. Système d'outil selon la revendication 1, **caractérisé en ce que** le premier élément partiel (27) et le second élément partiel (29) de l'élément de serrage (17) peuvent être vissés entre eux.

3. Système d'outil selon la revendication 1 ou 2, **caractérisé en ce qu'**au moins une partie supplémentaire (61, 3') est disposée entre la première partie (3) et la seconde partie (5).

4. Système d'outil selon l'une des revendications précédentes, **caractérisé en ce que** l'élément de serrage (17) saisit toutes les parties de la jonction.

5. Système d'outil selon l'une des revendications précédentes, **caractérisé en ce qu'**un élément partiel (29) de l'élément de serrage (17) présente la tête de serrage (19).

6. Système d'outil selon l'une des revendications précédentes, **caractérisé en ce que** l'élément partiel (29) présentant la tête de serrage (19) présente une surface d'appui (33) sur sa face détournée de la tête de serrage (19), qui coopère avec une face d'appui (35) prévue sur la partie adjacente de la jonction (1).
